# EUROPÄISCHE PATENTANMELDUNG

(11) **EP 0 928 560 A2**
(43) Veröffentlichungstag der Anmeldung: **14.07.1999**
(21) Anmeldenummer: 98124782.8
(22) Anmeldetag: 29.12.1998
(51) Int. Cl.: A23C 13/12, A23P 1/08, A23C 9/133

(54) **Nahrungsmittel vom Typ gekühlter Fertigdesserts**

(30) Priorität: 30.12.1997 DE 29722965 U
(71) Anmelder: SOCIETE DES PRODUITS NESTLE S.A., 1800 Vevey (CH)
(72) Erfinder: Liebenspacher, Franz, 8400 Winterthur (CH); Briegleb, Christoph, 84453 Mühldorf am Inn (DE)
(74) Vertreter: Thomas, Alain

(57) **Zusammenfassung**

Die Erfindung betrifft ein Nahrungsmittel vom Typ gekühlter Fertigdessert, das aus wenigstens zwei Nahrungsmittelkomponenten von dickflüssiger bis pastöser oder gelartiger Konsistenz zusammengesetzt ist, die so in einen gemeisamen Behälter abgefüllt sind, dass beide im wesentlichen unvermischt sind und den Behälter in räumlich komplexer Form gemeinsam füllen, wobei die Nahrungsmittelkomponenten in folgenden Kombination vorliegen :
zwei geschäumte Cremes von unterschiedlicher Färbung und/- oder mit unterschiedlichem Geschmack.

## Beschreibung

Die beiliegende Erfindung betrifft ein Nahrungsmittel vom Typ gekühlter Fertigdesserts auf der Basis von zwei gemeinsam in einen Behälter abgefüllten dickflüssigen bis pastösen oder gelartigen Komponenten.

Ein Verfahren zur Herstellung eines Zweikomponentenprodukts ist im Britischen Patent Nr. 1 573 351 beschrieben. Dieses Produkt ist aber nicht auf einer herkömmlichen Linie für die industrielle Abfüllung von Nahrungsmitteln herstellbar und ist nicht für den Kühlsektor vorgesehen.

Der Erfindung liegt die Aufgabe zugrunde, ein optisch und/- oder geschmacklich ansprechendes neues Nahrungsmittel vom Typ gekühlter Fertigdesserts, das aus wenigstens zwei Nahrungsmittelkomponenten von dickflüssiger bis pastöser Konsistenz zusammengesetzt ist, herzustellen, das man über mindestens 6 Wochen in gekühlten Verkaufsregalen bzw. im Kühlschrank aufbewahren und mit normalen Produktionslinien herstellen kann, wie sie für die Herstellung von gekühlten Milchdesserts verwendet werden, z.B. Füllmaschinen für vorgefertigte Kunststoffbecher.

Die Aufgabe wird durch ein Nahrungsmittel vom Typ gekühlter Fertigdesserts auf der Basis von mindestens zwei Komponenten gelöst, bei dem die wenigstens zwei Komponenten so in einen gemeinsamen Behälter abgefüllt sind, daß beide im wesentlichen unvermischt sind und den Behälter in räumlich komplexer Form gemeinsam füllen, wobei die beiden Komponenten des Nahrungsmittels in wenigstens einer der folgenden Kombinationen vorliegen:
zwei geschäumte Cremes von unterschiedlicher Färbung und/- oder mit unterschiedlichem Geschmack,
geschäumte Creme/geschäumtes Sahnedessert,
zwei nicht geschäumte Cremes von unterschiedlicher Färbung und/oder mit unterschiedlichem Geschmack,
Joghurt/pastöse Fruchtzubereitung,
zwei Wassergelees in unterschiedlicher Färbung und/oder mit unterschiedlichem Geschmack,
geschäumte oder ungeschäumte Creme/Wassergelee,
geschäumte oder ungeschäumte Creme/pastöse Fruchtzubereitung,
geschäumte oder ungeschäumte Creme/dickflüssige Fruchtsauce oder aromatisierte Dessertsauce,
geschäumte oder ungeschäumte Creme/dickflüssige Vanille- oder Schokoladesauce.

Unter Creme versteht man im Rahmen der vorliegenden Anmeldung ein Produkt, das bis zu 85 Gew.-% Milch und Sahne und bis zu 10 Gew.-% Milchfett enthält. Die Creme kann dabei auch ein als Pudding bezeichenbares Produkt sein.

Unter einem geschäumten Sahnedessert versteht man ein geschäumtes Milchprodukt mit einem Fettgehalt von ca. 20 - 30 Gew.-%. Joghurt ist ein Milchprodukt, das bis zu 88 Gew.-% Milch und Sahne enthält und das mit einer Starterkultur fermentiert worden ist. Im Rahmen der vorliegenden Erfindung steht der Begriff Joghurt für einen Joghurt der milden Geschmacksrichtung bzw. einen Fruchtjoghurt.

Unter Fruchtzubereitung versteht man eine pastöse Masse, die irgendwelche Fruchtanteile in Form von Stückchen oder als Fruchtmus enthält, wobei einzelne Früchte oder Kombinationen von Früchten verwendet werden können. Auf die Erläuterungen zum Begriff "Fruchtzubereitung" in der gesetzlichen "Richtlinie für I. Fruchtzubereitungen zur Herstellung von Milchprodukten" wird zur Ergänzung der vorliegenden Offenbarung ausdrücklich Bezug genommen.

Unter einem Wassergelee versteht man ein aus Wasser und/oder einer Fruchtzusammensetzung oder Fruchtsaft und Geliermitteln sowie Aroma- und Farbstoffen hergestelltes halbsteifes bis steifes Produkt.

Zur Verwendung in einem erfindungsgemäßen Nahrungsmittel wird die erforderliche Mindestviskosität eines der genannten Produkte gegebenenfalls in an sich bekannter Weise durch Zusätze von Verdickungs- und/oder Geliermitteln eingestellt.

Eine Sauce ist eine dickflüssige, wässrige Lösung oder Dispersion von Verdickungsmittel und Zutaten.

Die einzelnen Komponenten des erfindungsgemäßen Produkts sind entweder nicht geschäumt oder aufgeschäumt. Die Höhe des Aufschäumens liegt zwischen 0 und 100 %, vorzugsweise zwischen 40 und 80%. Das Aufschäumen kann mit Stickstoff geschehen. Das Aufschäumen ist aber nicht notwendig.

Im abgefüllten Produkt sind die beiden Komponenten in der Regel in etwa gleichen Volumenanteilen anwesend, wobei es jedoch möglich ist, bei speziellen Produkten eine der Komponenten in einem stark verringerten Volumen- oder Gewichtsanteil einzusetzen, so daß das Gewichtsverhältnis der beiden Komponenten in einem Bereich von 17:83 bis 83:17 liegen kann.

Die Abfüllung geschieht normalerweise in einen Becher, z.B. einen durchsichtigen oder durchscheinenden Kunststoffbecher, der dann mit einer Siegelfolie versehen wird.

Bei der Abfüllung müssen die verschiedenen Komponenten eine bestimmte Viskosität aufweisen, damit sie gut pumpbar sind und bei und nach der Abfüllung nicht ineinanderfliessen.

Wird als eine der Komponenten eine Sauce eingesetzt, muß diese eine Viskosität von wenigstens 16 mPas aufweisen, und die weitere, gemeinsam mit der Sauce abgefüllte Komponente muß dann eine Viskosität von wenigstens 30 mPas aufweisen. Bei den anderen Kombinationen von Nahrungsmittelkomponenten liegen die Vskositäten beider der Komponenten in der Regel über 30 mPas. Die Viskosität der Komponenten darf jedoch 60 mPas nicht übersteigen. Die Viskosität ist in jedem der angegebenen Fälle die mit einem Brookfield Rheometer mit einer Drehzahl von 10 U/min und mit einer Kreuzspindel D bei 12 ° C gemessene Viskosität.

Die Herstellung des Nahrungsmittels vom Typ gekühlter Fertigdesserts geschieht auf konventionelle, an sich bekannte Weise: Für alle oben erwähnten Komponenten mischt man die Zutaten, unterwirft sie einer UHT-Behandlung (Ultrahoch-Temperatur) und füllt sie unter ultrahygienischen Bedingungen ab. Im Falle eines geschäumten Desserts muß man die UHT-Behandlung in der Regel als ersten Schritt durchführen, wonach man aufschäumt und anschließend abfüllt.

Für die gleichzeitige Abfüllung der beiden Komponenten verwendet man vorzugsweise eine Düse, wie sie im Patent EP Patent 0 615 692 beschrieben wird.

Die beiden Komponenten werden in Form von aus der/den Düse(n) erhaltenen Komponentensträngen im wesentlichen gleichzeitig in den gemeinsamen Behälter abgefüllt. Sie werden dabei entweder senkrecht oder spiral- oder zickzackförmig abgelegt. Dabei wird der Becher bewegt. Durch die Bewegung des Bechers während des Abfüllvorgangs wird die komplexe räumliche Anordnung der beiden Komponenten im Becher festgelegt, und zwar insbesondere durch die Art der Drehung des Behälters um seine senkrechte Achse. Wenn keine Drehung des Bechers durchgeführt wird, erhält man senkrecht angeordnete, streifenförmig wirkende Füllungsanteile. Durch eine einfache vollständige Drehung um 360° erzielt man eine einfache Spirale. Durch Mehrfachdrehungen, z.B. bis zu drei vollständigen Drehungen, oder eine Hin-und Herdrehung, z.B. zuerst 720° in die eine und dann 720° in die entgegengesetzte Richtung, pro Abfüllungvorgang erhält man spiral- oder zickzackförmige zierstreifenartige Muster.

Als Dekortopping kann in einem nachfolgenden Füllschritt wahlweise noch ein Sahnetopping oder eine Sauce aufdosiert werden.

Nachfolgend wird die Erfindung durch Angabe von Zusammensetzungen, die sich als vorteilhaft für die verschiedenen einzelnen Komponenten erwiesen haben, noch näher erläutert. Die prozentualen Mengenangaben erfolgen alle in Gew.-%.

### A) Cremedessert

- bis 85 % Milch und Sahne, wobei der Sahneanteil zwischen 0,1 und 40 % liegt,
- bis 10 % Milchfett
- 0 - 3,0 % Milchtrockenstoffe (z. B. Magermilchpulver, Milcheiweiss, Molkenpulver).
- 1,0 - 5,0 % modifizierte und/oder native Stärke,
- bis 0,5 % pflanzliches Verdickungsmittel,
- 10 - 1 % Zucker,
- Geschmackszutaten (Kakaopulver, Aromen, Kaffeextrakt, Karamelzuckersirup),
- Farbstoff (Beta-Carotin) und
- wahlweise bis zu 9 % Wasser als Kondensat.

Die Rezepturen von Saucen entsprechen im wesentlichen denen der o.g. Cremedesserts, wobei jedoch zur Verminderung der Viskosität weniger Stärke und Verdickungsmittel verwendet werden.

### B) geschäumtes Sahnedessert

- bis 85 % Milch und Sahne,
- 20 - 30 % Milchfett
- 0 - 3 % Milchtrockenstoffe (z. B. Magermilchpulver, Milcheiweiss, Molkenpulver),
- 5 - 10 % Zucker,
- 0,5 - 1,2 % Speisegelatine oder Austauschverdickungsmittel
   und
- wahlweise bis zu 9 % Wasser als Kondensat.

### C) Joghurt

- bis zu 88 % Milch und Sahne,
- bis zu 5 % Milchfett,
- 0 - 4 % Milchtrockenstoffe (z. B. Magermilchpulver, Milcheiweiss, Molkenpulver),
- 6 - 13 % Zucker
- 0 - 1 % Gelatine oder Austauschverdickungsmittel,
- 0 - 3 % modifizierte und/oder native Stärke,
- Aromen,
- Farbstoff (z.B. Beta-Carotin) und
- 0,02 - 5 % Starterkultur.

### D) Wassergelee

- - Wasser und/oder Fruchtsäfte: 71,5-90,7 %
- - Zucker: 8 - 18 %
- - Speisegelatine oder ein anderes Geliermittel: 0,2 - 1,5 %
- - modifizierte Stärke: 0 - 5 %
- - Säuerungsmittel: 0,1 - 1 %
- - Aromen und Farbstoffe: 1 - 3 %

## Patentansprüche

1. Nahrungsmittel vom Typ gekühlter Fertigdesserts, das aus wenigstens zwei Nahrungsmittelkomponenten von dickflüssiger bis pastöser oder gelartiger Konsistenz zusammengesetzt ist, die so in einen gemeinsamen Behälter abgefüllt sind, daß beide im wesentlichen unvermischt sind und den Behälter in räumlich komplexer Form gemeinsam füllen, wobei die Nahrungsmittelkomponenten in wenigstens einer der folgenden Kombinationen vorliegen:
zwei geschäumte Cremes von unterschiedlicher Färbung und/- oder mit unterschiedlichem Geschmack,
geschäumte Creme/geschäumtes Sahnedessert,
zwei nicht geschäumte Cremes von unterschiedlicher Färbung und/oder mit unterschiedlichem Geschmack,
Joghurtcreme/pastöse Fruchtzubereitung,
zwei Wassergelees in unterschiedlicher Färbung und/oder mit unterschiedlichem Geschmack,
geschäumte oder ungeschäumte Creme/Wassergelee,
geschäumte oder ungeschäumte Creme/pastöse Fruchtzubereitung,
geschäumte oder ungeschäumte Creme/dickflüssige Fruchtsauce oder aromatisierte Dessertsauce,
geschäumte oder ungeschäumte Creme/dickflüssige Vanille- oder Schokoladesauce.

2. Nahrungsmittel vom Typ gekühlter Fertigdesserts gemäß Anspruch 1, dadurch gekennzeichnet, daß das prozentuale Gewichtsverhältnis der beiden Komponenten im Bereich von 17:83 bis 83:17 liegt.

3. Nahrungsmittel vom Typ gekühlter Fertigdesserts gemäß Anspruch 1 oder 2, dadurch gekennzeichnet, daß das prozentuale Volumenverhältnis der beiden Komponente im Bereich von 60:40 bis 40:60, insbesondere bei etwa 50:50, liegt.

4. Nahrungsmittel vom Typ gekühlter Fertigdesserts gemäß einem der Ansprüche 1 bis, dadurch gekennzeichnet, daß eine der Komponenten bei der Abfüllung eine Viskosität von mindestens 30 mPas aufweist und die weitere der Komponenten bei der Abfüllung eine Viskosität von mindestens 16 mPas aufweist.

5. Nahrungsmittel vom Typ gekühlter Fertigdesserts gemäß einem Anspruch 4, dadurch gekennzeichnet, daß die weitere der Komponenten bei der Abfüllung ebenfalls eine Viskosität von mindestens 30 mPas aufweist.

6. Nahrungsmittel vom Typ gekühlter Fertigdesserts gemäß einem der Ansprüche 1 bis 5, dadurch gekennzeichnet, daß die komplexe räumliche Anordnung der beiden Komponenten im Behälter so ist, daß die Volumenanteile beider Komponenten im wesentlichen senkrecht, spiralförmig oder zickzackförmig angeordnet sind.

7. Nahrungsmittel vom Typ gekühlter Fertigdesserts gemäß einem der Ansprüche 1 bis 6, dadurch gekennzeichnet, daß es zusätzlich ein geschäumtes Sahnetopping aufweist.

8. Nahrungsmittel vom Typ gekühlter Fertigdesserts gemäß einem der Ansprüche 1 bis 7, dadurch gekennzeichnet, daß die komplexe räumliche Anordnung der beiden Komponenten eine solche ist, wie sie durch ein gemeinsames Einbringen von mindestens zwei Strängen der beiden Komponenten aus einer oder mehreren stationären Düse(n) unter gleichzeitiger Rotation des Behälters in eine oder zwei entgegengesetzte Richtung(en) erhalten wird.

9. Nahrungsmittel vom Typ gekühlter Fertigdesserts gemäß einem der Ansprüche 1 bis 8, dadurch gekennzeichnet, daß es in einem durchsichtigen oder durchscheinenden becherförmigen Behälter abgefüllt ist.
